(19) Europäisches Patentamt
European Patent Office
Office européen des brevets

(11) **EP 2 045 927 A1**

(12) **EUROPEAN PATENT APPLICATION**

(43) Date of publication:
**08.04.2009 Bulletin 2009/15**

(51) Int Cl.:
***H04B 1/707*** (2006.01)

(21) Application number: **08017298.4**

(22) Date of filing: **01.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **03.10.2007 JP 2007259880**

(71) Applicant: **NEC Corporation**
**Minato-ku**
**Tokyo 108-8001 (JP)**

(72) Inventor: **Oura, Satoshi**
**Tokyo (JP)**

(74) Representative: **Glawe, Delfs, Moll**
**Patentanwälte**
**Postfach 26 01 62**
**80058 München (DE)**

(54) **CDMA receiving apparatus**

(57) Disclosed is a CDMA receiver including a delay profile generating unit for generating a plurality of delay profiles in time slots; path detecting units for detecting paths from the plurality of delay profiles; delay spread calculating units for calculating delay spreads based upon the detected paths; a finger-number-allocation calcu-
lating unit for calculating a number of fingers to be allocated based upon number of detected paths and delay spreads; and finger allocating units for allocating fingers to the detected paths from the number of fingers to be allocated as calculated by the finger-number-allocation calculating unit.

FIG.1

**Description**

REFERENCE TO RELATED APPLICATION

This application is based upon and claims the benefit of the priority of Japanese patent application No. 2007-259880, filed on October 03, 2007, the disclosure of which is incorporated herein in its entirety by reference thereto.

TECHNICAL FIELD

This invention relates to a receiving apparatus that relies upon a CDMA (code division multiple access) communication scheme.

BACKGROUND

A receiving apparatus that relies upon CDMA communication generates a delay profile from a value of correlation between a received signal and a known code sequence and detects peaks in the delay profile as paths, thereby obtaining the synchronization timings of the received signal and demodulating the received signal. In order to select a path that will be allocated to a finger used at the time of RAKE combining of the received signal, the path level is compared with a path-level threshold value and only a path having a level above the threshold value is selected, as described in Patent Document 1 (Japanese Patent Kokai Publication No. JP-A-10-336072), etc., by way of example.
If a large number of fingers are allocated at this time, demodulation by RAKE combining can be performed in excellent fashion.
[Patent Document 1]
Japanese Patent Kokai Publication No. JP-A-10-336072
[Patent Document 2]
Japanese Patent Kokai Publication No. JP-P2001-36451A
[Non-Patent Document 1]
(Aoyama, Yoshida, Ushirokawa, "CDMA Path-search Scheme Using Combined Delay Profile of Diversity Antennas", The Institute of Electronics, Information and Communication Engineers, Technical Report RCS99-67, 1999

SUMMARY OF THE DISCLOSURE

The following analyses are given by the present invention.
In the CDMA receiver, the number of fingers usually is limited since it is decided by the hardware capacity thereof.
In a conventional CDMA receiver, peaks in a delay profile generated from a received signal are simply detected as paths in order of decreasing level and fingers are allocated without taking the propagation environment into consideration. This leads to waste of hardware resources by allocating more fingers than necessary, or to a deterioration in reception characteristics by not allocating sufficient fingers where required.
The distribution of paths of the received signal differs depending upon the propagation environment. In the urban environment, obstacles create a large number of paths.
It is indicated in Non-Patent Document 1 that a group of a large number of paths arrives within a range of eight chips in an urban propagation environment, while a path seen as a single path having a spread of only 1 chip also arrives.
In a case such as this, demodulation accuracy in RAKE combining declines and reception quality deteriorates unless a sufficiently large number of fingers are allocated to a temporally spread path group.
On the other hand, it will suffice if one finger is allocated to a single path.
Thus, if fingers can be allocated in accordance with the state of the path distribution, it will be possible to allocate a finite number of fingers without waste, thereby improving the reception characteristic.
An object of the present invention is to provide an apparatus that makes it possible to improve reception characteristics while utilizing resources effectively in allocating of fingers.
The invention disclosed in this application has the configuration set forth below.
In accordance with one aspect of the present invention, there is provided a CDMA receiving apparatus comprising: delay spread calculating means for obtaining a delay spread of paths detected in correspondence with a path detection range; and finger-number-allocation calculating means for calculating a number of fingers to be allocated from the delay spread and a number of detected paths.
In the present invention, the CDMA receiving apparatus further comprises: delay profile generating means for generating delay profiles in correspondence with respective path detection ranges; path detecting means for detecting paths from an associated delay profile; and finger allocating means for allocating fingers to detected paths based upon the number of fingers to be allocated as calculated by the finger-number-allocation calculating means.

In the present invention, the CDMA receiving apparatus further comprises: two-dimensional profile generating means for generating a two-dimensional profile obtained by combining distributions of correlation power values in a time direction and angle direction in correspondence with a path detection range; path detecting means for detecting paths from the two-dimensional profile; and angle spread calculating means for obtaining an angle spread of paths detected in correspondence with an associated path detection range; wherein the finger-number-allocation calculating means calculates the number of fingers to be allocated based upon the angle spread and the number of detected paths in addition to the delay spread obtained by the delay spread calculating means.

In accordance with another aspect of the present invention, there is provided a CDMA receiving method comprising:

a delay spread calculating step of obtaining a delay spread of paths detected in correspondence with a path detection range; and

a finger-number-allocation calculating step of calculating a number of fingers to be allocated based upon the delay spread and a number of detected paths.

In the present invention, the CDMA receiving method further comprises:

a delay profile generating step of generating delay profiles in correspondence with respective path detection ranges; a path detecting step of detecting paths from the delay profiles; and a finger allocating step of allocating fingers to detected paths based upon the number of fingers to be allocated as calculated at the finger-number allocation calculating step.

In the present invention, the CDMA receiving method further comprises:

a two-dimensional profile generating step of generating a two-dimensional profile obtained by combining distributions of correlation power values in a time direction and angle direction in correspondence with a path detection range; a path detecting step of detecting paths from the two-dimensional profile; and an angle spread calculating step of obtaining an angle spread of paths detected in correspondence with an associated path detection range; wherein the number of fingers to be allocated is calculated at the finger-number allocation calculating step based upon the delay spread, angle spread and the number of detected paths.

In accordance with the present invention, optimum allocation of fingers conforming to the state of path distribution is carried out, thereby improving reception characteristics while utilizing hardware resources effectively.
Other features and advantages of the present invention will be apparent from the following description taken in conjunction with the accompanying drawings, in which like reference characters designate the same or similar parts throughout the figures thereof.

BRIEF DESCRIPTION OF THE DRAWINGS

Fig. 1 is a diagram illustrating the configuration of a first exemplary embodiment of the present invention;
Fig. 2 is a diagram illustrating an example of path detection;
Fig. 3 is a flowchart useful in describing the operation of the first embodiment;
Fig. 4 is a diagram illustrating the configuration of a second exemplary embodiment of the present invention; and
Fig. 5 is a flowchart useful in describing the operation of the first exemplary embodiment.

PREFERRED MODES OF THE INVENTION

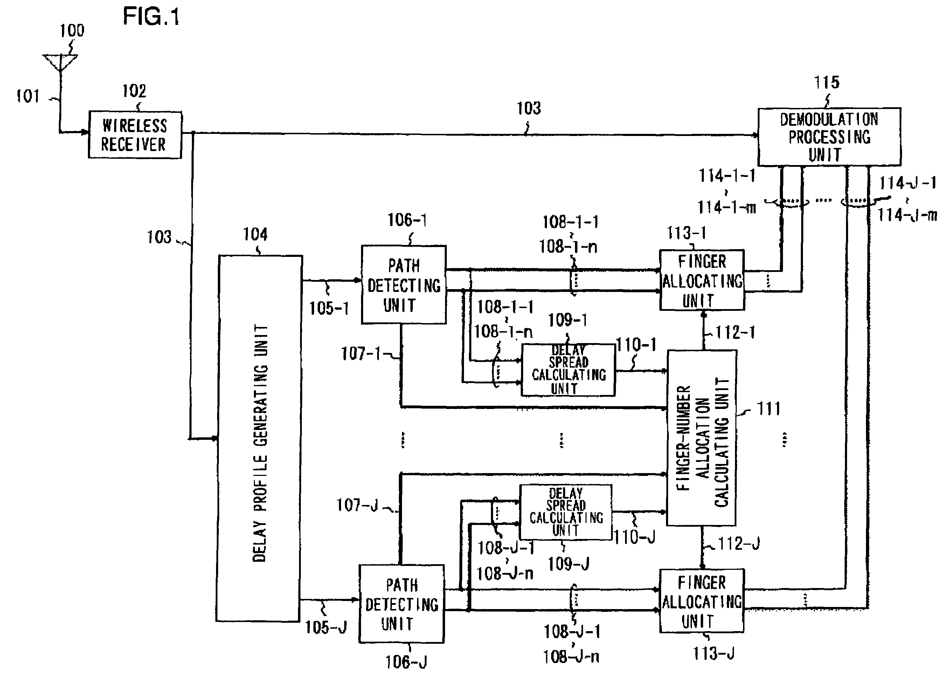

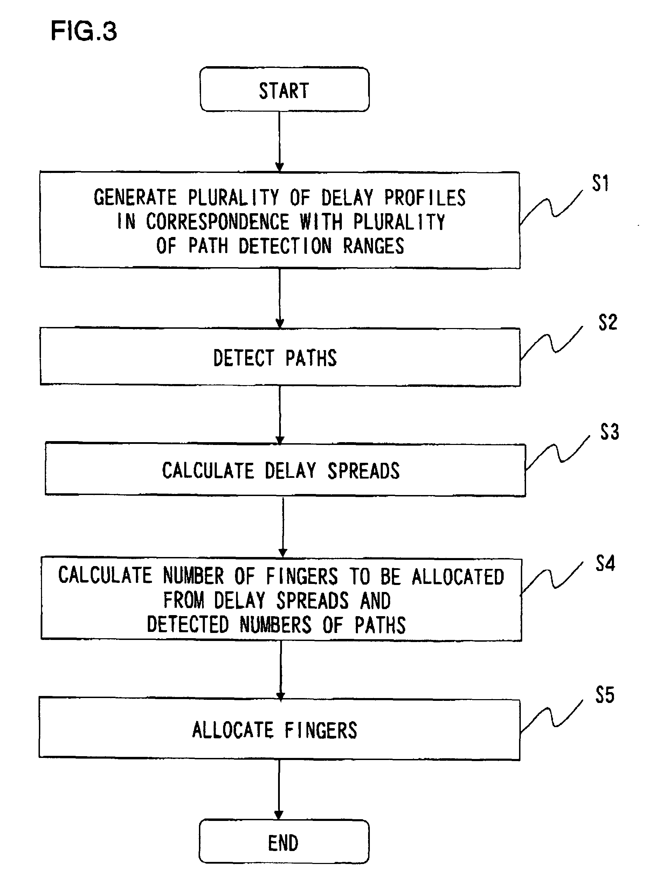

A mode of practicing the present invention will be described below. Fig. 1 is a diagram illustrating the configuration of a first exemplary embodiment of the present invention, and Fig. 3 is a flowchart useful in describing the operation of the first exemplary embodiment. In the present invention, a delay profile generating unit (104) delimits ranges of time and generates a plurality of delay profiles (105-1 to 105-J) (step S1 in Fig. 3).

Path detecting units (106-1 to 106-J) detect paths from the plurality of delay profiles (105-1 to 105-J) (step S2 in Fig. 3).

Delay spread calculating units (109-1 to 109-J) calculate delay spreads based upon the detected paths (step S3 in Fig. 3).

A finger-number-allocation calculating unit (111) calculates the number of fingers to be allocated based upon the number of detected paths and delay spreads (step S4 in Fig. 3).

Finger allocating units (113-1 to 113-J) allocate fingers to the detected paths based upon the number of fingers to be allocated as calculated by the finger-number-allocation calculating unit 111 (step S5 in Fig. 3).

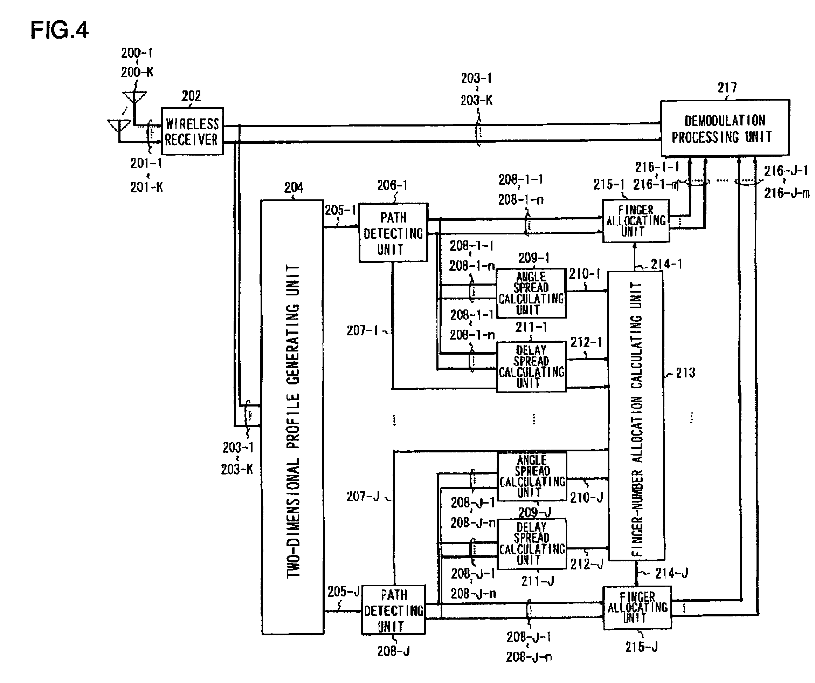

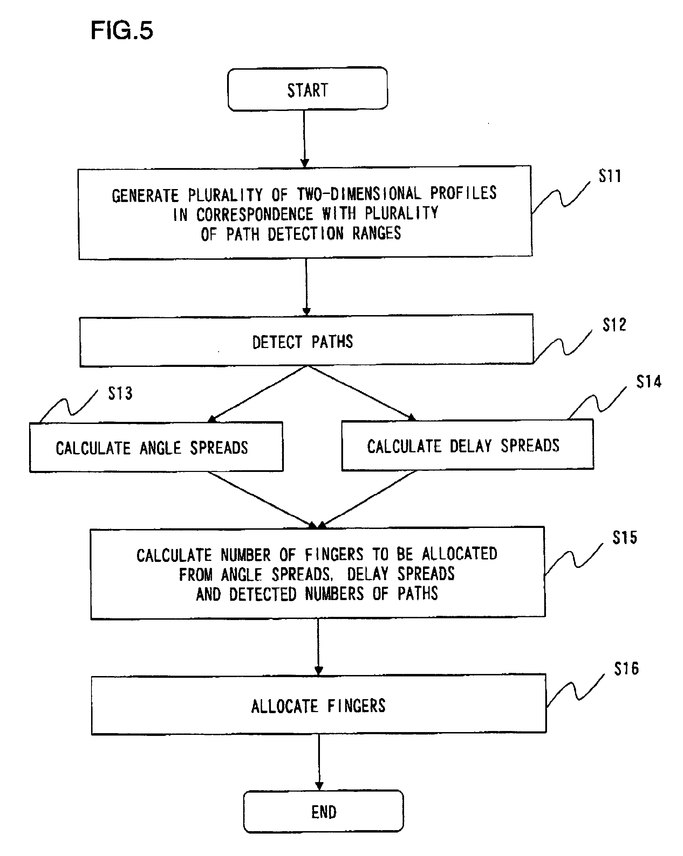

Alternatively, a two-dimensional profile generating unit (204 in Fig. 4) generates a plurality of two-dimensional profiles (step S11 in Fig. 5), and path detecting units (206-1 to 206-J) detect paths from the plurality of two-dimensional profiles (205-1 to 205-J) (step S12 in Fig. 5). Angle spread calculating units (209-1 to 209-J in Fig. 4) calculate angle spreads (210-1 to 210-J) from angles of arrival and levels of detected paths (208-1-1 to 208-J-n) (step S13 in Fig. 5), and delay spread calculating units (211-1 to 211-J) calculate delay spreads (211-1 to 212-J) from timings and levels of detected paths (208-1-1 to 208-J-n) (step S14 in Fig. 5). A finger-number-allocation calculating unit (213) calculates the number of fingers to be allocated based upon the number of detected paths, angle spreads and delay spreads (step S15 in Fig. 5), and finger allocating units (215-1 to 215-J) allocate fingers to the detected paths based upon the number of fingers to be allocated calculated by the finger-number-allocation calculating unit (213) (step S16 in Fig. 5). Embodiments of the invention will now be described.

A CDMA receiving apparatus according to this embodiment includes:

(a) an antenna unit 100 for receiving a signal;
(b) a radio receiver 102 for converting an analog radio signal to a digital baseband signal;
(c) a delay profile generating unit 104 for generating delay profiles separated into J-number (where J is a natural number) of path detection ranges;
(d) path detecting units 106-1 to 106-J for detecting peaks in J-number of delay profiles as paths;
(e) delay spread calculating units 109-1 to 109-J for calculating delay spreads of the detected paths;
(f) a finger-number-allocation calculating unit 111 for calculating a number of fingers to be allocated based upon number of detected paths and delay spreads;
(g) finger allocating units 113-1 to 113-J for allocating fingers to the detected paths; and
(h) a demodulation processing unit 115 executes despreading modulation processing using the fingers allocated.

The delay spread calculating units 109-1 to 109-J calculate the delay spreads from path timings and path levels 108-1-1 to 108-J-n.

Delay spread ($\sigma_r$) is an index indicating temporal dispersion of paths in a delay profile calculated from the timing and level of each path (i.e., it indicates how much spread paths are from their average timing), and it is calculated according to Equation (1) below.

$$\sigma_\tau = \sqrt{\frac{1}{\sum\limits_{i=1}^{N} P_i} \cdot \sum_{i=1}^{N}(\tau_i - \bar{\tau})^2 P_i}$$

$$\dots \text{Equation (1)}$$

where i, $P_i$, $\tau_i$ and N represent the path number, the path level of the ith path, the path timing of the ith path and the number of paths, respectively.

In Equation (1), $\bar{\tau}$ represents the average path timing and is calculated as follows:

$$\bar{\tau} = \frac{1}{\sum\limits_{i=1}^{N} P_i} \cdot \sum_{i=1}^{N} \tau_i P_i$$

$$\dots \text{Equation (2)}$$

The delay spread ($\sigma_r$) is large in a case where paths having the same level exist in spaced-apart relation to one another, and is small in a case where paths exist closely together at the same timing.

On the basis of a previously set reference table of finger-allocation weighting coefficients corresponding to delay spreads and numbers of detected paths, the finger-number-allocation calculating unit 111 decides numbers 112-1 to 112-J of fingers to be allocated corresponding to numbers 107-1 to 107-J of detected paths and delay spreads 110-1 to 110-J and outputs these to the finger allocating units 113-1 to 113-J. The larger the detected number of paths, the greater the number of fingers that need to be allocated.

Further, in a case where the delay spread ($\sigma_r$) is large, it is considered that the paths are arriving dispersed in terms of time. It is necessary, therefore, that a large number of fingers be allocated.

Accordingly, the finger-allocation weighting coefficients are decided for every detected path range using the detected number of paths and delay spread. The number of fingers to be allocated is calculated based upon this decision.

By way of example, the finger-allocation weighting coefficients can be decided using a reference table of the kind shown in Table 1 below.

TABLE 1

| REFERENCE TABLE OF FINGER-ALLOCATION WEIGHTING COEFFICIENTS | | |
|---|---|---|
| DETECTED NUMBER OF PATHS | DELAY SPREAD | FINGER-ALLOCATION WEIGHTING COEFFICIENT |
| 5 OR GREATER | 1.0 OR GREATER | 5 |
| 5 OR GREATER | LESS THAN 1.0 | 4 |
| LESS THAN 5 AND 1 OR GREATER | 1.0 OR GREATER | 2 |
| LESS THAN 5 AND 1 OR GREATER | LESS THAN 1.0 | 1 |
| 0 | - | 0 |

Here the number of fingers to be allocated can be found by multiplying the total number of fingers by the ratio of each weighting coefficient to the sum of the weighting coefficients. The total number of fingers refers to the number of fingers capable of being allocated, per user, decided by the hardware capacity. The number of fingers to be allocated is calculated, as indicated by Equation (3) below, based upon finger allocation priority.

$$\text{number of fingers to be allocated} = \text{total number of fingers} \times \frac{(\text{finger -allocation weighting coefficient})}{(\text{sum of finger -allocation weighting coefficients})}$$

$$\ldots \text{Equation (3)}$$

The sum of the finger-allocation weighting coefficients is a value obtained by summing the finger-allocation weighting coefficients of all the path detection ranges.

The larger the finger-allocation weighting coefficient, the larger the number of fingers allocated.

Fig. 3 is a flowchart for describing the operation of the first exemplary embodiment of the present invention. Operation of the first exemplary embodiment will be described with reference to Figs. 1 and 3.

An analog radio signal 101 received by the antenna unit 100 is converted to a digital baseband signal 103 by the radio receiver 102 and the digital baseband signal 103 is output to the delay profile generating unit 104 and demodulation processing unit 115.

The delay profile generating unit 104 multiplies the digital baseband signal 103 by a known code sequence and calculates a correlation power value for each of J-number of path detection ranges set in advance, thereby obtaining delay profiles 105-1 to 105-J (step S1).

In the delay profiles applied thereto, the path detecting units 106-1 to 106-J detect peaks having the levels which are equal to or greater than a previously set path-detection threshold value and select n of these as paths in order of decreasing level starting from the maximum level (step S2). The path detecting units 106-1 to 106-J output numbers of detected paths 107-1 to 107-J to the finger-number-allocation calculating unit 111 and output detected path timing information and level information of detected paths 108-1-1 to 108-J-n to the delay spread calculating units 109-1 to 109-J and finger allocating units 113-1 to 113-J. Here n is a natural number and is a value that is the same or different for each path detection range. Further, the path-detection threshold value employs a value obtained by multiplying an average value of the delay profile by a previously set coefficient or a value obtained by multiplying the maximum peak level by a previously set coefficient smaller than 1.

The delay spread calculating units 109-1 to 109-J calculate the delay spreads 110-1 to 110-J from the timings and levels of detected path 108-1-1 to 108-J-n using Equations (1) and (2) (step S3) and output these to the finger-number-allocation calculating unit 111.

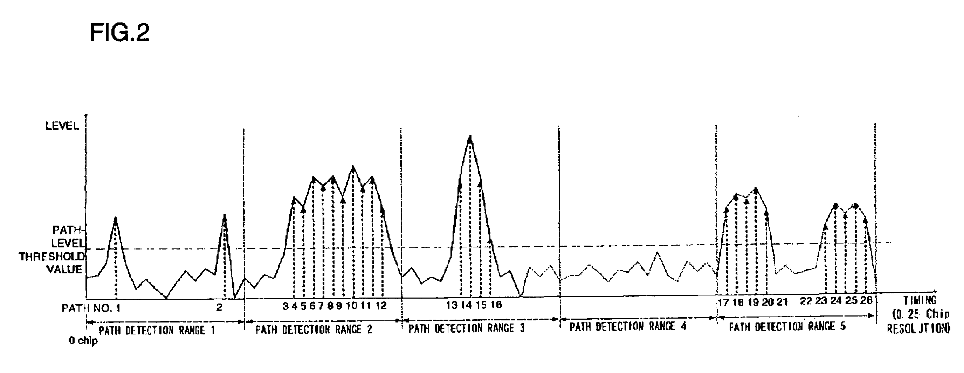

An example of path detection as shown in Fig. 2 will now be described.

In path detection range 1, two paths having similar levels arrive temporally dispersed.

In path detection range 2, ten paths of similar levels arrive closely together in time.

In path detection range 3, four paths are detected but only one actual path arrives. Three other paths are side lobes of the arriving signal erroneously detected.

In path detection range 4, there is not even a single peak having a level equal to or greater than the path-detection threshold value and therefore no path is detected.

In path detection range 5, there are two groups of five pulses each arriving spaced apart in time.

Table 2 below illustrates delay spreads and numbers of detected paths calculated from the path timings and path levels in this example of path detection.

TABLE 2

| PATH TIMINGS, PATH LEVELS, DETECTED NUMBERS OF PATHS AND DELAY SPREADS IN PATH DETECTION EXAMPLE | | | | | |
|---|---|---|---|---|---|
| PATH DETECTION RANGE | PATH NO. | PATH TIMING (chips) | PATH LEVEL | NUMBER n OF DETECTED PATHS | DELAY SPREAD |
| 1 | 1 | 0.75 | 8.2 | 2 | 1.375 |
| | 2 | 3.5 | 8.4 | | |
| 2 | 3 | 5.25 | 10 | 10 | 0.803 |
| | 4 | 5.50 | 9.2 | | |
| | 5 | 5.75 | 12 | | |
| | 6 | 6.0 | 11.1 | | |
| | 7 | 6.25 | 12.2 | | |
| | 8 | 6.5 | 10.1 | | |
| | 9 | 7.0 | 13 | | |
| | 10 | 7.25 | 11 | | |
| | 11 | 7.5 | 11.8 | | |
| | 12 | 7.75 | 9.2 | | |
| 3 | 13 | 9.5 | 11.7 | 4 | 0.245 |
| | 14 | 9.75 | 16.1 | | |
| | 15 | 10.0 | 11.8 | | |
| | 16 | 10.25 | 5.8 | | |

(continued)

| PATH TIMINGS, PATH LEVELS, DETECTED NUMBERS OF PATHS AND DELAY SPREADS IN PATH DETECTION EXAMPLE | | | | | |
|---|---|---|---|---|---|
| PATH DETECTION RANGE | PATH NO. | PATH TIMING (chips) | PATH LEVEL | NUMBER n OF DETECTED PATHS | DELAY SPREAD |
| 5 | 17 | 16.25 | 8.7 | 10 | 1.296 |
| | 18 | 16.5 | 10 | | |
| | 19 | 16.75 | 9.7 | | |
| | 20 | 17.0 | 10.6 | | |
| | 21 | 17.25 | 8.6 | | |
| | 22 | 18.75 | 7 | | |
| | 23 | 19.0 | 9 | | |
| | 24 | 19.25 | 8.1 | | |
| | 25 | 19.5 | 9 | | |
| | 26 | 19.75 | 7.7 | | |

The finger-number-allocation calculating unit 111 obtains the number of fingers to be allocated, per path detection range, from the path spreads 110-1 to 110-n and numbers 107-1 to 107-J of detected paths (step S4).

If the total number of fingers is assumed to be 12 in the example of path detection shown in Fig. 2, then the number of fingers to be allocated is calculated from Equation (3) for each path detection range, as indicated in Table 3 below.

TABLE 3

| EXAMPLE OF NUMBERS OF FINGERS ALLOCATED IN PATH DETECTION EXAMPLE | | |
|---|---|---|
| PATH DETECTION RANGE | FINGER-ALLOCATION WEIGHTING COEFFICIENT | NUMBER OF FINGERS ALLOCATED |
| 1 | 2 | 2 |
| 2 | 4 | 4 |
| 3 | 1 | 11 |
| 4 | 0 | 0 |
| 5 | 5 | 5 |

Depending upon the total number of fingers and the value of the finger-allocation weighting coefficient, a fraction may appear in the calculated number of fingers to be allocated. In such case it is so arranged that all of the fingers are allocated by allocating fingers for which the fraction has been discarded to the path detection range having the largest weighting coefficient.

For each of the J-number of path detection ranges, the finger allocating units 113-1 to 113-J allocate fingers to the detected paths using the numbers 112-1 to 112-J of fingers to be allocated (step S5) and output path timings 114-1-1 to 114-J-m allocated to the fingers to the demodulation processing unit 115.

In a case where a detected number of paths in a path detection range is less than the numbers 112-1 to 112-J of fingers to be allocated, the finger allocating units 113-1 to 113-J only allocate a number of fingers equivalent to the detected number of paths and invalidate the remaining fingers.

Conversely, if the numbers 112-1 to 112-J of fingers to be allocated are smaller than the numbers of detected paths, then the finger allocating units 113-1 to 113-J allocate fingers only in the numbers of fingers to be allocated, and the allocation is made in order of decreasing path level starting from the path having the highest level within the path detection range.

Accordingly, a number m of paths to be allocated to fingers for each path detection range is a natural number and has a value less than n; it is the same or a different value for each path detection range.

An example of finger allocation in this example of path detection is shown in Table 4 below.

TABLE 4

| EXAMPLE OF FINGER ALLOCATION IN PATH DETECTION EXAMPLE | | | | |
|---|---|---|---|---|
| PATH DETECTION RANGE | NUMBER OF FINGERS ALLOCATED | PATH NO. | PATH TIMING (chips) | PATH LEVEL |
| 1 | 2 | 2 | 3.5 | 8.4 |
| | | 1 | 0.75 | 8.2 |
| 2 | 4 | 9 | 5.25 | 12.2 |
| | | 7 | 5.50 | 12 |
| | | 5 | 5.75 | 11.1 |
| | | 11 | 6.0 | 10.1 |
| 3 | 1 | 14 | 9.75 | 16.1 |
| 5 | 5 | 20 | 16.25 | 10.6 |
| | | 18 | 16.5 | 10 |
| | | 19 | 16.75 | 9.7 |
| | | 23 | 17.0 | 9 |
| | | 25 | 17.25 | 9 |

In path detection range 1, all paths are allocated to fingers.

In path detection range 2, four of the ten detected paths are allocated to fingers.

In path detection range 3, one of the four detected paths are allocated to a finger, but since the three unallocated paths are considered to be paths that are the result of erroneously detecting side lobes, allocation is unnecessary.

In path detection range 5, five of the ten detected paths are allocated to fingers. From the two separate path groups, four paths are allocated from the first group and two from the second group.

Using the path timings 114-1-1 to 114-J-m, which have been allocated to the fingers, as synchronization timings of the received signal, the demodulation processing unit 115 performs demodulation processing such as despread processing, RAKE combining and decoding processing on the digital baseband signal 103 of the received signal.

Thus, it is possible to allocate finite fingers optimally in accordance with the state of path distribution. As a result, reception accuracy can be improved in comparison with conventional CDMA receivers.

In this embodiment, the number of fingers to be allocated is calculated from delay spread of paths and number of paths detected in each path detection range. As a result, optimum finger allocation conforming to the propagation environment can be performed and reception characteristics can be improved.

Next, a second exemplary embodiment of the present invention will be described. In accordance with the second exemplary embodiment, there is provided a CDMA receiving apparatus, which uses an array antenna, in which numbers of fingers to be allocated are calculated from delay spreads, angle spreads and numbers of detected paths, thereby enabling optimum finger allocation conforming to state of path distribution.

In a CDMA receiving apparatus using an array antenna as described in Patent Document 2 (Japanese Patent Kokai Publication No. JP-P2001-36451A), a distribution of correlation power values in the angle direction as well as in the time direction can be generated by multiplying a correlation value between a received signal and known code sequence by an antenna coefficient.

Such a distribution of correlation power values in the angle direction is referred to as an "angle profile", and the result of combining distributions of correlation power values in the time direction and angle direction is referred to as a "two-dimensional profile".

By detecting paths from two-dimensional profiles, estimation can be performed with regard to the direction of arrival in addition to synchronization timing of the received signal.

In Patent Document 2, however, a correlation-peak detecting unit simply detects peaks in the two-dimensional profiles as paths in order of decreasing level and allocates fingers without taking the propagation environment into consideration. As a consequence, there are cases where this leads to waste of hardware resources by allocating more fingers than necessary or, to deterioration of reception characteristics by not allocating sufficient fingers where required.

Fig. 4 is a diagram illustrating the configuration of a second exemplary embodiment of the present invention. The configuration of the second exemplary embodiment differs from that of the first exemplary embodiment of Fig. 1 in the following points:

(A) The apparatus has a plurality of antenna units.

(B) A two-dimensional profile generating unit 204 generates two-dimensional profiles rather than delay profiles.

(C) The apparatus is additionally provided with angle spread calculating units 209-1 to 209-J.

(D) A finger-number-allocation calculating unit 213 calculates numbers of fingers to be allocated using angle spreads in addition to delay spreads and number of paths.

(E) A demodulation processing unit 217 performs beam forming by multiplying digital baseband signals 203-1 to 203-K, which have been received from each antenna unit, by antenna coefficients.

(F) Path detecting units 206-1 to 206-J output angle of arrival information in addition to path levels and timings to detect paths in the two-dimensional profiles.

Angle spread calculating units 209-1 to 209-J calculate angle spreads 210-1 to 210-J from detected path levels and angles of arrival.

Angle spread indicates temporal dispersion of paths in an angle profile calculated from an angle of arrival and level of each path, and it is calculated according to Equation (4) below.

$$\sigma_\theta = \sqrt{\frac{1}{\sum\limits_{i=1}^{N} P_i} \cdot \sum\limits_{i=1}^{N} \left(\theta_i - \bar{\theta}\right)^2 P_i}$$

$$\dots \text{Equation (4)}$$

where i, $P_i$, $\theta_i$ and N represent the path number, the path level of the ith path, the angle of arrival of the ith path and the number of paths, respectively. Furthermore, $\bar{\theta}$ represents the average angle of arrival of paths and is calculated as follows:

$$\bar{\theta} = \frac{1}{\sum\limits_{i=1}^{N} P_i} \cdot \sum\limits_{i=1}^{N} \theta_i P_i$$

$$\dots \text{Equation (5)}$$

Thus, the angle spread is large in a case where paths having the same level arrive in spaced-apart relation to one another, and is small in a case where paths arrive closely together at the same angle.

On the basis of a previously set reference table of finger-allocation weighting coefficients corresponding to delay spreads, angle spreads and numbers of detected paths, the finger-number-allocation calculating unit 213 decides numbers 214-1 to 214-J of fingers to be allocated corresponding to numbers 207-1 to 207-J of detected paths, angle spreads 210-1 to 210-J and delay spreads 212-1 to 212-J and outputs these to the finger allocating units 215-1 to 215-J.

If the angle spread is large, it is considered that the paths are arriving dispersed in space. It is necessary, therefore, that a large number of fingers be allocated. Accordingly, the finger-allocation weighting coefficients are determined for each detected path range using the number, delay spread and angle spread of detected paths. The number of fingers to be allocated is calculated from the determined weighting coefficients in a manner similar to that of the first exemplary embodiment.

Fig. 5 is a flowchart for describing the operation of the second exemplary embodiment of the present invention. Operation of the second exemplary embodiment will be described with reference to Figs. 4 and 5.

Analog radio signals 201-1 to 201-K received by K-number of antenna units 200-1 to 200-K are converted to digital baseband signals 203-1 to 203-K by a radio receiver 202 and the digital baseband signals 203-1 are output to the two-dimensional profile generating unit 204.

The two-dimensional profile generating unit 204 multiplies the digital baseband signals 203-1 to 203-K by a known code sequence, calculates a correlation value for each of J-number of path detection ranges set in advance, further multiplies this by an antenna coefficient to obtain a power value to thereby determine distributions of correlation power values in the time direction and angle direction, combines the distributions and outputs the result as two-dimensional profiles 205-1 to 205-J (step S11). The two-dimensional profiles are obtained by multiplying the correlation value by the antenna coefficient corresponding to each angle of arrival of a given angle resolution to form multiple beams.

Further, a path detection range is a range in a two-dimensional profile defined in the time and angle directions.

In the two-dimensional profiles applied thereto, the path detecting units 206-1 to 206-J detect peaks having the levels which are equal to or greater than a previously set path-detection threshold value and select n of these as paths in order of decreasing level starting from the maximum level (step S12). The path detecting units 206-1 to 206-J output numbers 207-1 to 207-J of detected paths to the finger-number-allocation calculating unit 213 and output angle of arrival information, timing information and level information of the detected paths 208-1-1 to 208-J-n to the angle spread calculating units 209-1 to 209-J, delay spread calculating units 211-1 to 211-J and finger allocating units 215-1 to 215-J. Here n is a natural number and is a value that is the same or different for each path detection range.

The angle spread calculating units 209-1 to 209-J calculate the angle spreads 210-1 to 210-J from the angles of arrival and levels of detected paths 208-1-1 to 208-J-n using Equations (4) and (5) (step S13) and output these to the allocated-finger-number calculating unit 213.

The delay spread calculating units 211-1 to 211-J calculate the delay spreads 212-1 to 212-J from the timings and levels of detected paths 208-1-1 to 208-J-n using Equations (1) and (2) (step S14) and output these to the finger-number-allocation calculating unit 213. It should be noted that either the calculation of angle spreads (step S13) or the calculation of delay spreads (step S14) may be performed first, or it may be so arranged that these calculations are performed simultaneously in parallel.

On the basis of the previously set reference table of finger-allocation weighting coefficients corresponding to angle spreads, delay spreads and numbers of the detected paths, the finger-number-allocation calculating unit 213 obtains numbers 214-1 to 214-J of fingers to be allocated, for each the path detection range, from the angle spreads 210-1 to 210-J, delay spreads 212-1 to 212-J and numbers of the detected paths 207-1 to 207-J of paths (step S15) and outputs these to the finger allocating units 215-1 to 215-J.

For each of the J-number of path detection ranges, the finger allocating units 215-1 to 215-J allocate fingers to the detected paths using the numbers 214-1 to 214-J of fingers to be allocated (step S16) and output path timings and angles of arrival 216-1-1 to 216-J-m allocated to the fingers to the demodulation processing unit 217.

In a case where a detected number of paths in a path detection range is less than the numbers 214-1 to 214-J of fingers to be allocated, the finger allocating units 215-1 to 215-J only allocate a number of fingers equivalent to the detected number of paths and invalidate the remaining fingers inoperative.

Conversely, if the numbers 214-1 to 214-J of fingers to be allocated are smaller than the numbers of detected paths, then the finger allocating units 215-1 to 215-J allocate fingers only in the numbers of fingers to be allocated, and the allocation is made in order of decreasing path level starting from the path having the highest level within the path detection range.

Accordingly, a number m of paths to be allocated to fingers for each path detection range is a natural number and has a value less than n; it is the same or a different value for each path detection range.

The demodulation processing unit 217 performs demodulation processing as despread processing, beam forming processing, RAKE combining and decoding processing on digital baseband signals 203-1 to 203-K corresponding to each antenna unit. The despread processing is performed using the path timings allocated to the fingers as synchronization timings, and the beam forming processing is executed by multiplying the despread signals by antenna coefficients corresponding to the angles of arrival allocated to the fingers.

Thus, in accordance with this embodiment, it is possible to allocate a finite number of fingers optimally in accordance with the state of path distribution even in a CDMA receiving apparatus that employs an array antenna. In accordance with this embodiment, reception accuracy can be improved in comparison with conventional CDMA receivers that employ array antennas.

In the first and second exemplary embodiments illustrated above, it is assumed that the number of fingers to be allocated is calculated for each user involved in communication. However, it may be so arranged that the number of fingers is managed by the apparatus and the number of fingers to be allocated is calculated among users.

In this case, it will suffice if the total number of fingers in Equation (3) is set as a number of fingers determined by the hardware capacity of the apparatus and the sum of finger-allocation weighting coefficients is set as a sum of finger-allocation weighting coefficients corresponding to path detection ranges of all users.

As a result, optimum finger allocation conforming to the propagation environment can be performed between users, and therefore reception characteristics can be improved in comparison with a case where finger allocation is carried out on an individual user basis.

Though the present invention has been described in accordance with the foregoing embodiments, the invention is not limited to these embodiments and it goes without saying that the invention covers various modifications and changes that would be obvious to those skilled in the art within the scope of the claims.

**Claims**

1.  A CDMA receiving apparatus comprising:

    delay spread calculating means for obtaining a delay spread of paths detected in correspondence with a path detection range; and
    finger-number-allocation calculating means for calculating a number of fingers to be allocated from the delay spread and a number of detected paths.

2.  The apparatus according to claim 1, further comprising:

    delay profile generating means for generating delay profiles in correspondence with respective path detection ranges;
    path detecting means for detecting paths from an associated delay profile; and
    finger allocating means for allocating fingers to detected paths based upon the number of fingers to be allocated as calculated by the finger-number-allocation calculating means.

3.  The apparatus according to claim 1, further comprising:

    two-dimensional profile generating means for generating a two-dimensional profile, obtained by combining distributions of correlation power values in a time direction and angle direction in correspondence with a path detection range;
    path detecting means for detecting paths from the two-dimensional profile; and
    angle spread means for obtaining an angle spread of paths detected in correspondence with an associated path detection range;

    wherein the finger-number-allocation calculating means calculates the number of fingers to be allocated based upon the angle spread and the number of detected paths in addition to the delay spread obtained by the delay spread calculating means.

4.  The apparatus according to any one of claims 1 to 3, wherein the finger-number-allocation calculating means calculates a number of fingers to be allocated per user involved in communication, or manages the number of fingers by the apparatus and calculates a number of fingers to be allocated among users.

5.  A CDMA receiving method comprising:

    obtaining a delay spread of paths detected in correspondence with a path detection range; and
    calculating a number of fingers to be allocated from the delay spread and a number of detected paths.

6.  The method according to claim 5, further comprising:

    generating delay profiles in correspondence with respective path detection ranges;
    detecting paths from an associated delay profile; and
    allocating fingers to detected paths based upon the number of fingers to be allocated as calculated in the finger-number calculating step.

7.  The method according to claim 5, further comprising:

    generating a two-dimensional profile obtained by combining distributions of correlation power values in a time direction and angle direction in correspondence with a path detection range;
    detecting paths from the two-dimensional profile; and
    obtaining an angle spread of paths detected in correspondence with an associated path detection range;

    wherein the number of fingers to be allocated is calculated, in the finger-number calculating step, based upon the delay spread, angle spread and the number of detected paths.

FIG.1

EP 2 045 927 A1

# FIG.2

## FIG.3

START

GENERATE PLURALITY OF DELAY PROFILES
IN CORRESPONDENCE WITH PLURALITY
OF PATH DETECTION RANGES — S1

DETECT PATHS — S2

CALCULATE DELAY SPREADS — S3

CALCULATE NUMBER OF FINGERS TO BE ALLOCATED
FROM DELAY SPREADS AND
DETECTED NUMBERS OF PATHS — S4

ALLOCATE FINGERS — S5

END

# FIG.4

EP 2 045 927 A1

## FIG.5

START

GENERATE PLURALITY OF TWO-DIMENSIONAL PROFILES
IN CORRESPONDENCE WITH PLURALITY
OF PATH DETECTION RANGES
S11

DETECT PATHS
S12

S13
CALCULATE ANGLE SPREADS

S14
CALCULATE DELAY SPREADS

CALCULATE NUMBER OF FINGERS TO BE ALLOCATED
FROM ANGLE SPREADS, DELAY SPREADS
AND DETECTED NUMBERS OF PATHS
S15

ALLOCATE FINGERS
S16

END

Europäisches
Patentamt

European
Patent Office

Office européen
des brevets

# EUROPEAN SEARCH REPORT

**Application Number**

EP 08 01 7298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/069790 A (PA CONSULTING SERVICES [GB]; LUNN TIMOTHY JOHN [GB]; CARR ALAN GEOFFRE) 21 August 2003 (2003-08-21) | 1,4,5 | INV. H04B1/707 |
| Y | * page 5, line 7 - line 17 * <br> * page 7, line 1 - line 7 * <br> ----- | 2,6 | |
| Y | EP 1 209 818 A (NIPPON ELECTRIC CO [JP]) 29 May 2002 (2002-05-29) <br> * paragraph [0028] - paragraph [0029]; figure 3 * <br> * paragraph [0042] - paragraph [0043] * <br> ----- | 2,6 | |
| A | EP 1 617 565 A (NIPPON ELECTRIC CO [JP]) 18 January 2006 (2006-01-18) <br> * paragraph [0049] - paragraph [0057] * <br> * paragraph [0093] - paragraph [0095] * <br> ----- | 3,7 | |

| | | |
|---|---|---|
| | | **TECHNICAL FIELDS SEARCHED (IPC)** |
| | | H04B |

The present search report has been drawn up for all claims

| Place of search | Date of completion of the search | Examiner |
|---|---|---|
| Munich | 20 January 2009 | Giglietto, Massimo |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 08 01 7298

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2009

| Patent document cited in search report | | Publication date | Patent family member(s) | | Publication date |
|---|---|---|---|---|---|
| WO 03069790 | A | 21-08-2003 | AU | 2003205878 A1 | 04-09-2003 |
| | | | EP | 1483842 A2 | 08-12-2004 |
| | | | GB | 2385498 A | 20-08-2003 |
| | | | JP | 2005518130 T | 16-06-2005 |
| | | | US | 2005227733 A1 | 13-10-2005 |
| EP 1209818 | A | 29-05-2002 | CN | 1356802 A | 03-07-2002 |
| | | | DE | 60112389 D1 | 08-09-2005 |
| | | | DE | 60112389 T2 | 08-06-2006 |
| | | | JP | 3428637 B2 | 22-07-2003 |
| | | | JP | 2002164815 A | 07-06-2002 |
| | | | US | 2002064217 A1 | 30-05-2002 |
| EP 1617565 | A | 18-01-2006 | CN | 1722625 A | 18-01-2006 |
| | | | JP | 2006033427 A | 02-02-2006 |
| | | | US | 2006013290 A1 | 19-01-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007259880 A
- JP 10336072 A
- JP P200136451 A

**Non-patent literature cited in the description**

- **AOYAMA ; YOSHIDA ; USHIROKAWA.** CDMA Path-search Scheme Using Combined Delay Profile of Diversity Antennas. *The Institute of Electronics, Information and Communication Engineers, Technical Report RCS99-67,* 1999